# EUROPÄISCHE PATENTANMELDUNG

(11) **EP 1 308 093 A1**
(43) Veröffentlichungstag der Anmeldung: **07.05.2003**
(21) Anmeldenummer: 02450252.8
(22) Anmeldetag: 31.10.2002
(51) Int. Cl.: A21C 11/00

(54) **Verfahren zum Herstellen eines Pizzabodens**

(30) Priorität: 02.11.2001 AT 8442001 U
(71) Anmelder: Kratky, Sascha, 4600 Wels (AT); Kratky, Christina, 4600 Wels (AT)
(72) Erfinder: Kratky, Sascha, 4600 Wels (AT); Kratky, Christina, 4600 Wels (AT)
(74) Vertreter: Hübscher, Helmut, Dipl.-Ing.

(57) **Zusammenfassung**

Es wird ein Verfahren zum Herstellen eines Pizzabodens beschrieben, der aus einer Portion eines Hefeteiges (4) mit Hilfe eines Stempels (2) in einer mit einem Teil (5) einer späteren Verpackungshülle ausgelegten Preßform (1) zu einem Formling (3) gepreßt und nach einer gärungsbedingten Volumsvergrößerung aufgrund einer Wärmebehandlung tiefgefroren wird, wobei der den Hefeteig (4) in der Preßform (1) aufnehmenden Hüllenteil (5) vor dem Frieren des Formlings (3) mit einer Deckfolie (7) zu einer luftdichten Verpackungshülle randseitig verbunden wird. Um vorteilhafte Konstruktionsbedingungen zu schaffen, wird vorgeschlagen, daß der in die Preßform (1) eingebrachte Hefeteig (4) unter Zwischenlage der Deckfolie (7) mittels des Stempels (2) zum Formling (3) gepreßt wird und daß die Deckfolie (7) mit dem den Hefeteig (4) aufnehmenden Hüllenteil (5) vor der Wärmebehandlung luftdicht verbunden wird.

## Beschreibung

Die Erfindung bezieht sich auf ein Verfahren zum Herstellen eines Pizzabodens, der aus einer Portion eines Hefeteiges mit Hilfe eines Stempels in einer mit einem Teil einer späteren Verpackungshülle ausgelegten Preßform zu einem Formling gepreßt und nach einer gärungsbedingten Volumsvergrößerung aufgrund einer Wärmebehandlung tiefgefroren wird, wobei der den Hefeteig in der Preßform aufnehmenden Hüllenteil vor dem Frieren des Formlings mit einer Deckfolie zu einer luftdichten Verpackungshülle randseitig verbunden wird.

Zur Herstellung von Pizzaböden ist es bekannt (US 4251549 A), eine Portion Hefeteig in einer Preßform mit Hilfe eines Stempels zu einem den späteren Pizzaboden bildenden Formling zu pressen, wobei in die Preßform eine Folie als Teil einer späteren Verpackungshülle eingelegt wird, bevor der Teig in die Preßform eingebracht und zum Formling gepreßt wird. Nach einer Wärmebehandlung und der damit verbundenen Volumsvergrößerung wird der Formling vorgebacken, um dann nach dem Aufbringen eines Belages mit einer Deckfolie abgedeckt zu werden, die mit der den Hefeteig beim Pressen aufnehmenden Folie randseitig verschweißt wird. Mit dieser Verpackungshülle kann dann die vorbereitete Pizza tiefgefroren werden. Nachteilig bei dieser Pizzavorbereitung ist, daß der Pizzaboden einerseits vorgebacken und anderseits belegt wird, so daß keine Pizzaböden bereitgestellt werden können, die frisch zubereiteten Pizzaböden vergleichbar beliebig belegt werden können. Das Vorfertigen nicht vorgebackener Pizzaböden macht Schwierigkeiten, weil die zu vergleichsweise dünnen Formlingen gepreßten Hefeteige während der Wärmebehandlung im Oberflächenbereich austrocknen, wenn nicht aufwendige Dampfbehandlungen vorgesehen werden, und auch beim anschließenden Einfrieren Qualität einbüßen.

Der Erfindung liegt somit die Aufgabe zugrunde, ein Verfahren zum Herstellen eines Pizzabodens der eingangs geschilderten Art so zu verbessern, daß tiefgefrorene, backfertige Pizzaböden hoher Qualität zur Verfügung gestellt werden können, ohne den Pizzaboden vorbacken zu müssen.

Die Erfindung löst die gestellte Aufgabe dadurch, daß der in die Preßform eingebrachte Hefeteig unter Zwischenlage der Deckfolie mittels des Stempels zum Formling gepreßt wird und daß die Deckfolie mit dem den Hefeteig aufnehmenden Hüllenteil vor der Wärmebehandlung luftdicht verbunden wird.

Da zufolge dieser Maßnahmen der Hefeteig zwischen dem in die Preßform eingelegten Hüllenteil und der zwischen Stempel und Hefeteig eingeführten Deckfolie zu einem Formling gepreßt wird, liegen der Hüllenteil und die Deckfolie der Verpackung ohne Lufteinschluß satt am Formling an, so daß nach einer luftdichten Verbindung von Hüllenteil und Deckfolie ein Austrocknen des Hefeteiges im Oberflächenbereich während einer Wärmebehandlung auch ohne Dampfanwendung verhindert wird. Der Hefeteig ändert daher seine Qualität bei der Wärmebehandlung und der damit verbundenen Volumsvergrößerung nicht, zumal auch der Einfluß des Luftsauerstoffes auf den Hefeteig unterbunden wird. In ähnlicher Weise verhindert die luftdichte Verpackungshülle des Formlings nachteilige Einflüsse auf den Hefeteig durch Kondenswasserbildung während der Kühlung, so daß bei gleichbleibender Qualität des Hefeteiges eine von äußeren Einflüssen unabhängige Güte der auf diese Weise hergestellten Pizzaböden sichergestellt werden kann, ohne eine aufwendige Wärmebehandlung oder ein Vorbacken vorsehen zu müssen. Dazu kommt noch, daß auch hohen Hygieneanforderungen ohne besonderen Aufwand entsprochen werden kann.

Wird ein an die Preßform angepaßter Verpackungsteller als den Hefeteig aufnehmender Hüllenteil in die Preßform eingelegt, so kann über diesen Verpackungsteller eine die Handhabung erleichternde, selbsttragende Verpakkungseinheit geschaffen werden, mit der die jeweilige Hefeteigportion in die Preßform gefördert werden kann.

Obwohl der Hüllenteil mit der Deckfolie außerhalb der Preßform randseitig verbunden werden kann, ergeben sich besonders einfache Herstellungsbedingungen, wenn der Hüllenteil mit der Deckfolie im Zuge des Pressens des Hefeteiges zu einem Formling randseitig verschweißt wird, weil in diesem Fall für das Verschweißen von Hüllenteil und Deckfolie kein gesonderter Arbeitsschritt erforderlich wird.

Anhand der Zeichnung wird das erfindungsgemäße Verfahren näher dargestellt. Es zeigen
- Fig. 1: eine Vorrichtung zum Pressen eines Formlings aus einer Hefeteigportion vor dem Pressen des Formlings in einem schematischen Axialschnitt und
- Fig. 2: diese Presse in einer der Fig. 1 entsprechenden Darstellung, jedoch nach dem Pressen des Formlings.

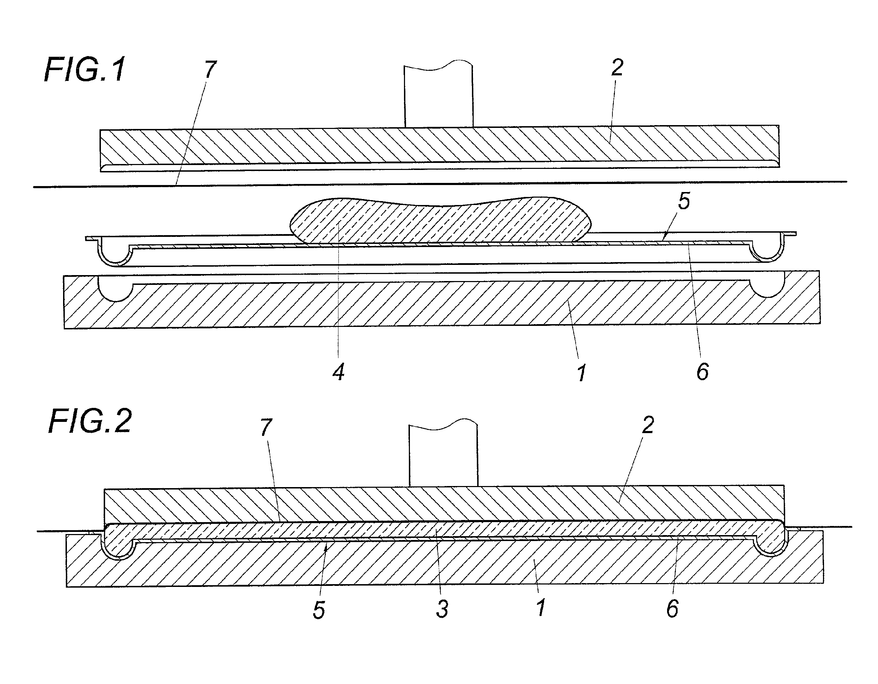

Die in den Fig. 1 und 2 schematisch dargestellte Presse weist eine matrizenartige Preßform 1 auf, die mit einem Stempel 2 zusammenwirkt. Der zu einem Formling 3 zu pressende, portionierte Hefeteig 4 wird unter Zwischenlage eines Teiles 5 einer späteren Verpackungshülle, beispielsweise eines Verpackungstellers 6, in die Preßform 1 eingebracht, wobei der Verpackungsteller 6 zur Förderung des Hefeteiges 4 in die Preßform 1 herangezogen werden kann. Der Stempel 2 wird im Gegensatz zu bekannten Pressen dieser Art nicht unmittelbar, sondern unter Zwischenlage einer Deckfolie 7 an den Hefeteig 4 angepreßt, so daß die Pressung des Hefeteigs 4 zum Formling 3 zwischen dem Hüllenteil 5 und der Deckfolie 7 mit der Wirkung durchgeführt wird, daß der Hefeteig 4 ohne Lufteinschluß zwischen Hüllenteil 5 und Deckfolie 7 zum Formling 3 gepreßt wird, weil ja die Luft zwischen Hefeteig 4 und Hüllenteil 5 bzw. Deckfolie 7 während des Preßvorganges seitlich nach außen verdrängt wird. Damit wird in vorteilhafter Weise ein luftdichter Einschluß des Formlings 3 zwischen dem Hüllenteil 5 und der Deckfolie 7 möglich, wenn die Deckfolie 7 randseitig mit dem Hüllenteil 5 zu einer Verpackungshülle verschweißt wird, was vorteilhaft im Zuge des Preßvorganges durch ein übliches Schweißen durchgeführt werden kann. Die Zwischenlage der Deckfolie 7 zwischen Stempel 2 und Hefeteig 4 vereinfacht darüber hinaus das Öffnen der Presse ohne Gefahr, daß der Formling 3 am Stempel 2 haften bleibt, weil die Deckfolie 7 als Trennfolie wirksam wird. Der gepreßte Formling 3 kann somit der Preßform 1 entnommen und einer Wärmebehandlung zugeführt werden, um den für den Pizzaboden erforderlichen Gärprozeß einzuleiten, der mit einer entsprechenden Volumsvergrößerung des Formlings 3 verbunden ist. Da dieser Gärvorgang unter Luftabschluß vor sich geht, kann ein Austrocknen des Hefeteigs während der Wärmebehandlung ausgeschlossen werden, ohne sonst erforderliche Dampfbehandlungen einsetzen zu müssen. Beim randseitigen Verbinden von Hüllenteil 5 und Deckfolie 7 ist die Volumszunahme während der nachfolgenden Wärmebehandlung zu berücksichtigen. Selbstverständlich muß insbesondere die Deckfolie 7 diese Volumsvergrößerung zulassen.

Nach der Wärmebehandlung wird der Formling 3 tiefgefroren, wobei die luftdichte Verpackungshülle die Qualität des Pizzabodens beeinträchtigende äußere Einflüsse unterbindet, wie sie beispielsweise durch eine Kondensierung der Luftfeuchtigkeit auftreten können. Es wird daher die Herstellung von Pizzaböden gleichbleibender hoher Güte ermöglicht, wobei die hinsichtlich ihrer Qualität durchaus mit frisch zubereiteten Pizzaböden vergleichbaren Pizzaböden vor ihrer weiteren Verarbeitung lediglich der Verpackungshülle zu entnehmen sind.

## Patentansprüche

1. Verfahren zum Herstellen eines Pizzabodens, der aus einer Portion eines Hefeteiges (4) mit Hilfe eines Stempels (2) in einer mit einem Teil (5) einer späteren Verpackungshülle ausgelegten Preßform (1) zu einem Formling (3) gepreßt und nach einer gärungsbedingten Volumsvergrößerung aufgrund einer Wärmebehandlung tiefgefroren wird, wobei der den Hefeteig (4) in der Preßform (1) aufnehmenden Hüllenteil (5) vor dem Frieren des Formlings (3) mit einer Deckfolie (7) zu einer luftdichten Verpackungshülle randseitig verbunden wird, **dadurch gekennzeichnet, daß** der in die Preßform (1) eingebrachte Hefeteig (4) unter Zwischenlage der Deckfolie (7) mittels des Stempels (2) zum Formling (3) gepreßt wird und daß die Deckfolie (7) mit dem den Hefeteig (4) aufnehmenden Hüllenteil (5) vor der Wärmebehandlung luftdicht verbunden wird.

2. Verfahren nach Anspruch 1, **dadurch gekennzeichnet, daß** ein an die Preßform (1) angepaßter Verpackungsteller (6) als den Hefeteig (4) aufnehmender Hüllenteil (5) in die Preßform (1) eingelegt wird.

3. Verfahren nach Anspruch 1 oder 2, **dadurch gekennzeichnet, daß** der Hüllenteil (5) mit der Deckfolie (7) im Zuge des Pressens des Hefeteiges (4) zu einem Formling (3) randseitig verschweißt wird.
